# EUROPEAN PATENT SPECIFICATION

(11) **EP 1 890 181 B1**
(45) Date of publication and mention of the grant of the patent: **04.07.2012**
(21) Application number: 07022937.2
(22) Date of filing: 18.10.2002
(51) Int. Cl.: G02B 26/08, G02B 6/35, B81C 1/00

(54) **Digital optical switch apparatus and process for manufacturing same**
Digitale optische Schaltvorrichtung und Verfahren zu ihrer Herstellung
Appareil de commutation optique numérique et son procédé de fabrication

(30) Priority: 19.10.2001 US 348083 P; 09.11.2001 US 345919 P
(43) Date of publication of application: 20.02.2008
(62) Divisional of application: 02799161.1
(73) Proprietor: ION Geophysical Corporation, Houston, TX 77042-2839 (US)
(72) Inventor: Yu, Duli, Sugar Land TX 77478 (US); Selvakumar, Arjun, Bellaire TX 77401 (US); Goldberg, Howard, Sugar Land TX 77479 (US); Yi, Taechung, Sugar Land Texas 77478 (US)
(74) Representative: Jeffrey, Philip Michael

(56) References cited:
- WO-A-01/04638
- WO-A-01/04680
- WO-A-01/07945
- WO-A-01/53194
- DE-A1- 4 129 218
- US-A- 6 115 326
- US-A- 6 143 583
- US-A1- 2001 029 087
- US-B1- 6 198 180
- US-B1- 6 262 827
- KURTH S ET AL: "Synchronously working micromirrors for beam steering: design and application aspects" PROCEEDINGS OF THE SPIE, SPIE, BELLINGHAM, VA, US, vol. 3787, July 1999 (1999-07), pages 63-73, XP002310357 ISSN: 0277-786X

## Description

The present invention generally relates to three-dimensional micro-machined devices and more particularly to a micro-machined mirror apparatus having multiple axes of rotation and discrete positioning.

Micro-machined devices have gained widespread use in a variety of applications in recent years. One such application is the use of such devices in optical applications in which a micro-machined mirror structure is used as an optical switch to deflect an incident light beam to redirect the light beam in a plurality of directions.

The typical MEMS mirror used as an optical switch includes a micro-machined mirror structures that can be deflected by applying electrical energy to one or more electrodes. The energized electrodes provide a force on the mirror thereby inducing an angular change in the surface plane of the mirror.

It is desirable to have a mirror surface with two axes of angular (i.e. rotational) freedom in these optical switches. Some typical devices provide such freedom by providing a gimbaled coupling between the mirror and a mirror support structure, then providing a gimbaled coupling between the mirror support structure and a second support structure. Other known devices include a pedestal-type mirror structure.

While these typical devices provide the desired degrees of freedom, they suffer from several disadvantages. These devices provide only analog movement. This movement is a continuous sweeping movement from one angular position to another angular position. As such, any induced mechanical shock during operation may move the mirror thereby disrupting the operation. Moreover, accurate positioning using electrical energy is very difficult. Thus it is desirable to provide a planar mirror surface with multiple axes of rotation, and providing digital positioning. Digital positioning as used herein is defined as one or more discrete planar positions including known angular relationships to a beginning or reference planar angle.

Another problem with the typical optical switch is that they are relatively difficult to manufacture. MEMS devices are three-dimensional structures. MEMS optical switches typically require at least two stacked layers having electrodes and electrode contacts passing from one layer to the next. The conventional process includes non-planar etching and dicing techniques that increase manufacturing time and reduce the reliability of the final product. Thus, it is desirable to provide a product manufactured using planar processes for etching, bonding and electrode traversal of multiple tiered devices.
WO 01/53194, over which the claims have been characterised, discloses a micro-device comprising a lower glass substrate, an upper glass substrate and a middle, beam-like, structure.
WO 01/04638 discloses various methods of fabricating micro-machined devices in which one or more layers of masking are applied onto one or more substrates, and are subsequently patterned.

The present invention addresses one or more of the above-identified problems found in conventional MEMS optical switches, such as those conventional devices described above.

The present invention provides a process of manufacturing a micro-machined apparatus.
According to an aspect of the present invention, there is provided a multi-tiered micro-machined device having at least three tiers as claimed in claim 1.
According to another aspect of the present invention, there is provided a planer fabrication method for creating a multi-tiered micro-mechanism device having at least three tiers as claimed in claim 9.
In a preferred embodiment, the process comprises providing a first substrate with a plurality of electrically isolated islands, providing an electrically conductive bond pad on each island, providing at least one second substrate having a plurality of electrical leads, and bonding the first substrate to the second substrate wherein each electrical lead is electrically coupled to one of the bond pads thereby creating a multi-tier device having electrically isolated electrical leads of one tier being accessible at another tier.

The present invention preferably enables transferring electrical feedthrough from each layer of a three-layer stack to accessible wire bond pads located in the top surface of the bottom and middle layers of the stack. Electrical conduits formed on the underside of the top cap of the stack are coupled to the top surface of the middle layer through isolated bond islands. Electrical paths on the middle layer lead to larger bond pads. Electrical conduits on the bottom layer of the three-wafer stack are accessed through openings formed in the middle layer.

The present invention in preferred embodiments at least, allows manufacturing personnel or machinery access to the several bond pads via multiple electrical conduits located on various wafers of the three-wafer stack. The conduits are electrically insulated from each other. The process obviates the need for complicated through-wafer via fabrication, and provides a planar machining process to fabricate the multi-tier MEMS structure.

For detailed understanding of the present invention, references should be made to the following detailed description of the preferred embodiment, taken in conjunction with the accompanying drawings, in which like elements have been given like numerals and wherein:
**Fig. 1A** is a packaged mirror array apparatus according to an embodiment of the present invention;
**Fig. 1B** is a 1xN mirror array stack assembly according to an embodiment of the present invention and used in the packaged apparatus of **Fig. 1A****;**
**Fig. 1C** is an exploded view of a micro-electromechanical systems (MEMS) mirror assembly;
**Fig. 2** is a top view of the apparatus **106;**
**Fig. 3** is a top view of the top cap **110;**
**Fig. 4** is a bottom view of the top cap **110** showing top cap electrodes;
**FIG. 5** shows the mirror assembly **112** made according to one embodiment of the present invention;
**Fig. 6A** is an isometric view of the bottom cap **114;**
**Figs. 6B-D** are schematic illustrations of alternative embodiments of the apparatus;
**Fig. 7A-C** show a process according to a preferred embodiment of the present invention for manufacturing the apparatus of Figs. 1-6;
**Figs. 8A-B** show views of a bond pad region of a device made using the process of **Figs. 7A****-C;**
**Figs. 9A-9C** show a shadow-masking method for optional use in the process of **Figs. 7A****-C;**
**Figs. 10A-B** illustrate operation of alternative embodiments of a cascaded digital mirror;
**Fig. 10C** illustrates operation of an alternative cascade embodiment that forms a face-to-face 8X8 digital optical switch;
**Fig. 11** illustrates an alternative process embodiment; and
**Fig. 12** is an alternative process embodiment with inverted mirror manufacturing to allow alternate electrode routing.

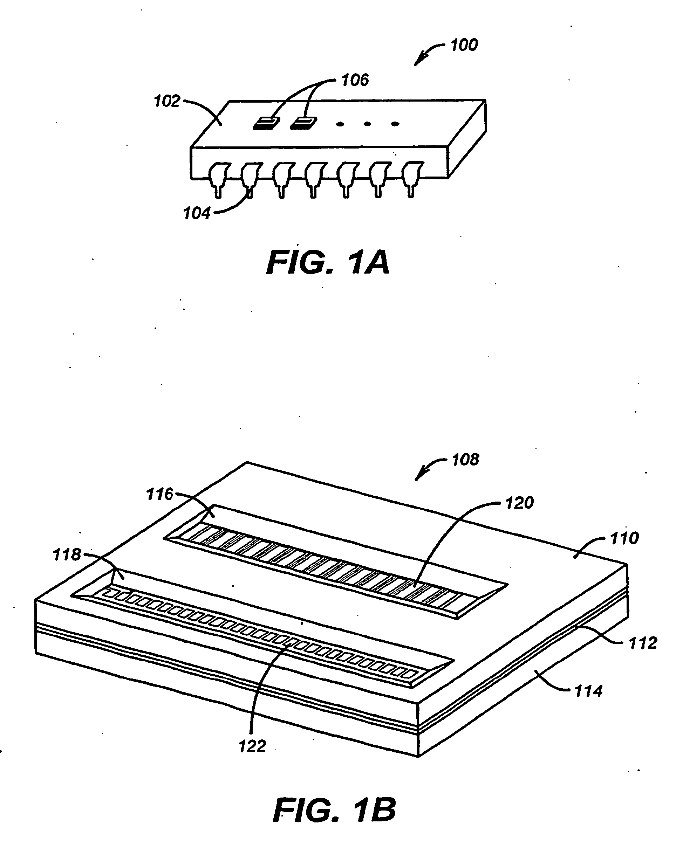

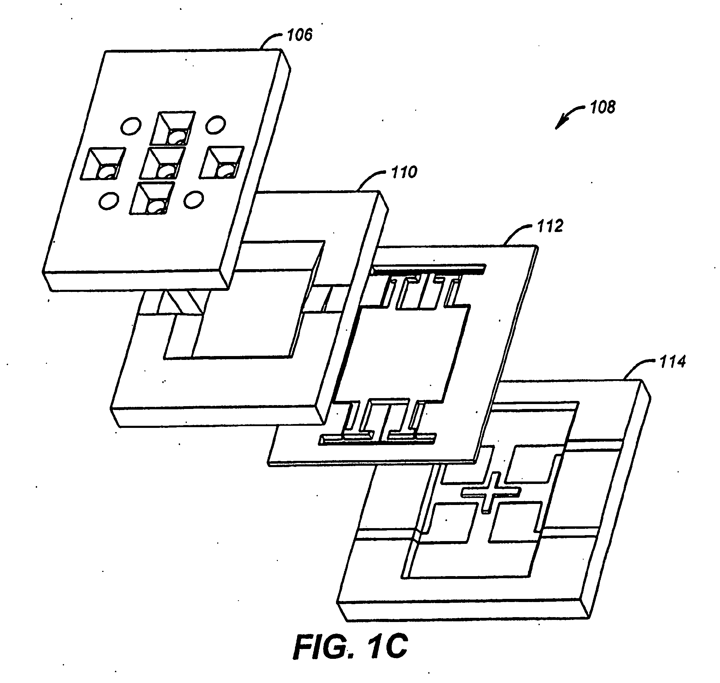

**Fig. 1A** is a packaged micro-electromechanical system (MEMS) mirror array apparatus **100** according to the present invention. The apparatus **100** includes a package **102** such as a typical printed circuit board (PCB) mountable housing or other frame structure known in the art, and a plurality of electrically conductive leads **104.** As will be described later with reference to **Fig. 1C****,** the packaged assembly may include one or more optional overlays **106.** The apparatus **100** of the present invention is useful as a digital optical switch for use in fiber optic or optical laser systems.

Referring to **Fig. 1** **B,** the apparatus **100** includes an internally mounted 1xN mirror array stack assembly **108**. The term 1XN as used herein describes one or more devices combined in an array, wherein the variable term N is an integer ranging from 1 (for a single device) to a positive value of 8 or more. The array assembly **108** includes a top electrode wafer **110,** a thinned mirror wafer **112** and a bottom electrode wafer **114.**

The top electrode wafer **110,** also called herein "top cap **110",** includes a mirror window **116** and a bond pad window **118** spaced apart from the mirror window **116.** The mirror window **116** provides an optical path that allows light to pass through the top cap **110** to meet one or more mirrors **120** integral to the mirror wafer **112.** The bond pad window **118** allows easy manufacturing access to a plurality of electrically conductive bond pads **122.** The plurality of bond pads **122** are connected to the electrical leads **104** for final packaging of the apparatus **100.**

**Fig. 1C** is an exploded view of the 1xN mirror array assembly 108 shown as a 1x1 (single-mirror stack) for simplicity of explanation. Shown is the three-wafer stack assembly **108,** including the bottom cap **114,** the thinned mirror wafer **112,** top cap **110** and the optional light-guide overlay **106.** The mirror wafer **112** is a dual axis moveable mirror assembly, which is bonded between the top cap **110** and bottom cap **114** to create the three-dimensional MEMS assembly **108.** The assembly **108** is then bonded to the frame **102** described above and shown in **Fig. 1A****.** The light-guide overlay **106,** when used, is bonded to the frame **102** such that the overlay **106** and top cap **110** are separated by a distance sufficient to allow light to travel through the light guide overlay and mirror window **116** along predetermined light paths.

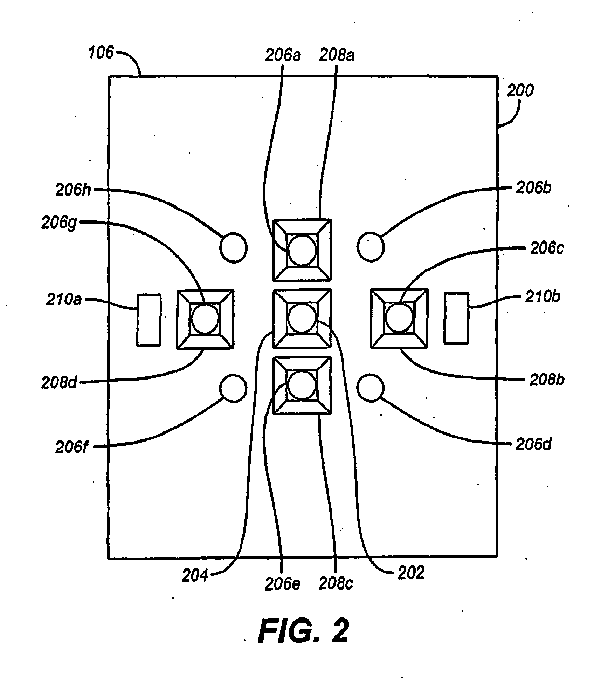

**Fig. 2** is a top view of the light-guide overlay **106.** The overlay **106** has a main structure **200.** Formed in the structure are an incident light port **202** and an incident light guide **204** in the approximate center of the structure **200.** Incident light enters the apparatus **100** through the incident light port **202,** with the incident light guide **204** providing angular tolerance for the incident light. The incident light is reflected within the apparatus 100 such that the reflected light travels along one of a plurality of discrete exit paths. The term "discrete" as used herein means substantially motionless when used to describe position. The term further means substantially invariant when used to describe a light path.

Light following an exit path exits the apparatus through one of a plurality of exit ports **206a-h.** Exit ports **206a-h** may or may not include an exit light guide **208a-d** for allowing interface tolerance between the apparatus **100** and an interfacing device (not shown). Similarly, incident light guide 204 is an optional feature. Furthermore, those skilled in the art with the benefit of the present disclosure would recognize that port **202** illustrates and described herein as incident light port **202** might serve as an exit port in an alternative embodiment. In this alternative embodiment any of the exit ports **206a-h** can be adapted to serve as an incident light port.

The optional light-guide overlay **106** is not required for an effective embodiment of the present invention. For example, applications having incident light comprising a laser may not need a guide. In such applications, the laser has a substantially invariant beam angle for the distances traveled. Thus the light paths are defined by the incident angle of the laser and the angle of reflection. In one embodiment, digital mirror assemblies are cascaded and the light guide overlay 106 is beneficial for cascading the assemblies. As will be explained later, each of the eight light guide output ports may be coupled to an input port of one of eight cascaded assembly overlays. A preferred coupling is by optic fibers. In this manner, the exit path is not necessarily restricted to a straight-line path.

The overlay **106** includes one or more mechanical bond pads **210a, 210b** to allow mechanical bonding to the external optical packaging frame **102.**

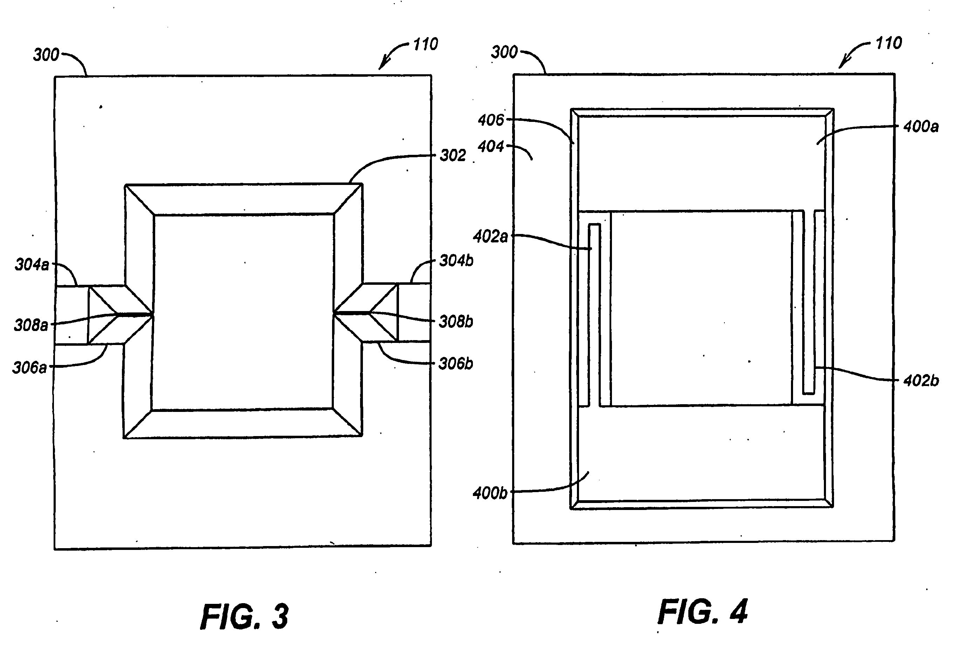

**Fig. 3** is a top view of the top cap **110.** The top cap **110** is formed in a substrate **300** such as a silicon wafer and includes a window **302** for allowing light to pass from the overlay **108,** through the top cap **110** to the mirror assembly **112.** Reflected light passes from the mirror assembly **112,** through the window **302** and out of the apparatus **100** through one of the exit ports (see **Fig. 2** at **206a-h).**

The top cap **110** includes electrically conductive contact pads 304a-b that provide conductive paths for energizing top cap electrodes (not visible in this view). Each path **304a-b** includes a wedge recess **306a-b** terminating in a groove opening **308a.b.** This allows for a process known as electrical feed-through via for making an electrically conductive path from the contact pads **304a-b** through the top cap **110** to connect the electrodes on the bottom of the top cap. To do this, electrically conductive metal is deposited using later described processes to the top of the top cap. The metal passes into the wedge recesses **306a-b,** through the groves **308a-b** to make contact with lead strips located on the bottom of the top cap.

**Fig. 4** is a bottom view of the top cap **110** showing a two-electrode configuration. Shown are top cap electrode feed strips **402a-b** that are electrically coupled to the top cap contact pads **304a-b** by the electrical feed-through via process just described. The top cap **110** has a bottom surface **404** in which a recess **406** is formed according to the process of the present invention. Two top cap electrodes **400a-b** are integral to the lead strips **402a-b,** both of which are metal deposited within the recess 406. Metal deposition of electrodes will be described in a process embodiment of the present invention. The electrodes **400a-b** and lead strips **402a-b** are preferably gold, but may be any suitable electrically conductive metal such as silver or aluminum or an alloy.

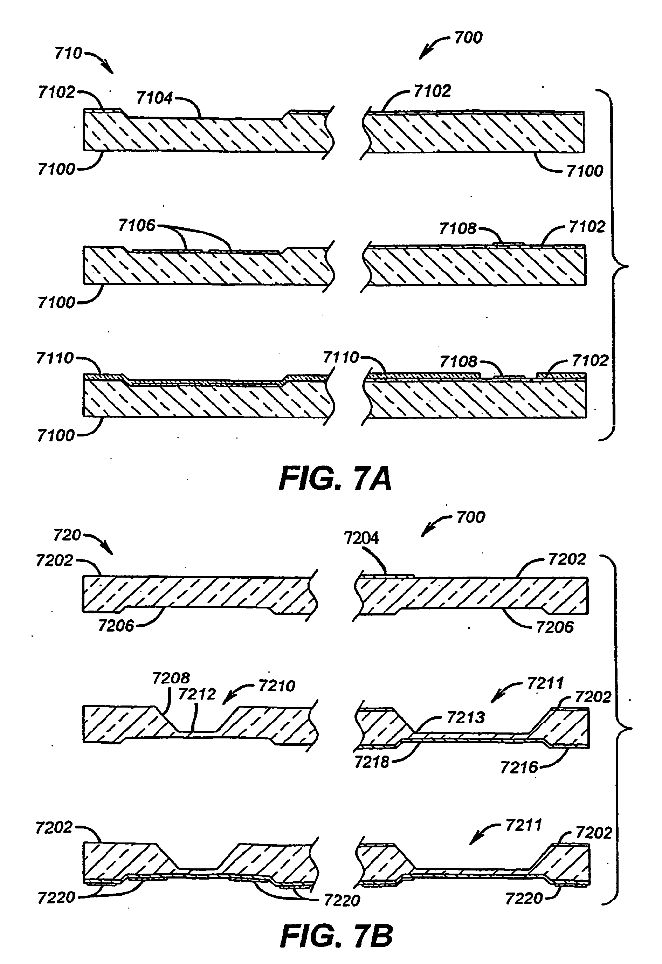

It is important to note that electrical feed through via is only one example not according to the present invention. Other methods of electrical feed through enabled by the processes of the present invention are isolated-island method of **Figs. 7A-C**. Also, the known technique if drill and fill could be used to provide electrical feed through. Drill and fill methods, however; are more time-consuming and less precise than the isolated island method and thus less desirable.

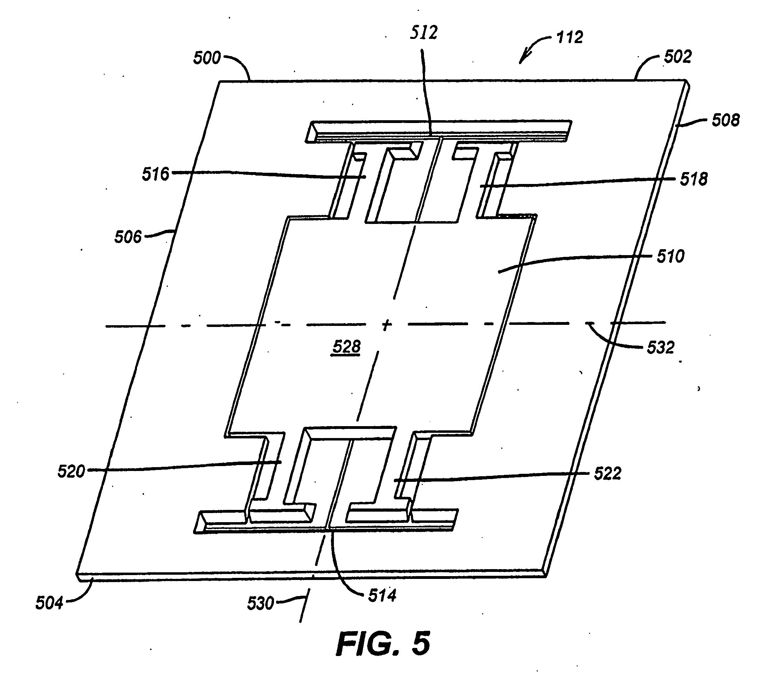

**Fig. 5** is an isometric view of the mirror assembly **112.** The assembly **112** is preferably an integral structure formed by micro-machining processes according to the present invention. The mirror assembly **112** is preferably an integral structure having a mass coupled to a support structure by a pair of substantially T-shaped hinges **512, 514,** which provides a single-gimbaled structure with two axes of rotation. An example of one such mirror assembly is described in detail in U.S. Patent application serial number 09/352,835, filed on July 13, 1999 (published as US 6,315,423), . An example of a mirror assembly having a plurality of bottom cap electrodes for providing two axes of rotational movement is described in detail in U.S. Patent application serial number 09/873,054, filed on June 1, 2001 (published as US 2002/012180). The present invention in preferred embodiments at least, provides digital positioning, control of movement damping, and manufacturing processes among other things not provided in these previous applications. Other structures, however, are considered within the scope of this invention. For example, any single-gimbaled hinge structure could replace the T-shaped hinge described herein.

**FIG. 5** shows the mirror assembly **112** made according to one embodiment of the present invention. The mirror assembly **112** includes a frame or mirror support structure **500** having support members **502, 504, 506** and **508.** The assembly **112** further comprises a mirror collection plate **510** with a reflective surface **528,** a top T-shaped hinge **512,** a bottom T-shaped hinge **514,** a top left travel stop finger **516,** a top right travel stop finger **518,** a bottom left travel stop finger **520,** and a bottom right travel stop finger **522.**

The advantage of digital positioning of the mirror collection plate **510** is provided by interaction between one or more of the travel stop fingers **518-522** and at least one of the top cap **110** and bottom cap **114.** The final position is determined by the interaction along with electrical energy applied to one or more electrodes in the apparatus **100.** In this manner a mirror can be created having discrete states #1-#8. Those skilled in the art would appreciate that the mirror collection plate **510** could be used as a multi-point travel stop, thereby eliminating the need for the travel stop fingers **516, 518, 520,** and **522.**

The 8 individual states of the mirror is each of these alternative embodiments can be described together for brevity. For these embodiments, state #1 is created when the upper travel stop fingers **516** and **518** interact with the bottom cap **114** or when the top edge of the mirror collection plate **510** interacts with the bottom cap **114.** State #2 is created when the two lower travel stop fingers **520** and **522** interact with the bottom cap **114** or when the lower edge of the mirror collection plate **510** interacts with the bottom cap **114.** State #3 is created when the left travel stop fingers 516 and **520** interact with the bottom cap **114** or when the left edge of the mirror plate Interacts with the bottom cap **114.** State #4 exists when the right travel stop fingers **518** and **522** interact with the bottom cap or when the right edge of the mirror plate interacts with the bottom cap **114.** State # 5 is created when the upper right travel stop finger **518** or the upper right corner of the mirror collection plate **510** contacts the bottom cap **114.** State #6 upper left travel stop finger **516** or the upper left corner of the mirror **528** contacts the bottom cap **114.** State #7 exists when the lower right travel stop finger **522** or the lower right corner of the mirror collection plate **510** contacts the bottom cap **114.** State #8 exists when the lower left travel stop finger **520** or when the lower left corner of the mirror collection plate **510** contacts the bottom cap **114.**

Those skilled in the art with the benefit of this disclosure would recognize that the mirror assembly described above is useful in the above-described digital mode or in an analog mode. As the mirror collection plate **510** moves between any two discrete states, the movement is analog in nature. Therefore, one only need to precisely control electrode voltage to operate the mirror in a three-dimensional analog mode. This analog mode of operation preferably uses a critically damped, or overdamped mirror.

The frame **500** provides the overall support structure for the mirror assembly **112.** The thickness of the collection plate **510** may range, for example, from about 10 to 70 microns depending on desired damping characteristics and to provide a compact structure having a low mass. In a preferred embodiment, beams of the T-shaped hinges **512, 514** have effective beam lengths ranging from about 500-2500 microns and cross sections of about 8,000 microns² to 160,000 microns² in order to absorb shock loads of about 2000g/0.5 ms half sine wave input.

The mirror collection plate **510** is coupled to the top T-shaped hinge **512** and the bottom T-shaped hinge **514.** In this manner, the mirror collection plate **510** is provided two axes of rotation **530, 532.** In a preferred embodiment, the axes **530, 532** are substantially perpendicular to one another. One axis **530** being positioned substantially along a first centerline of the mirror collection plate **510** and is coincident with the center of the T-shaped hinges, **512** and **514,** thereby providing a common axis of rotation for the springs. The other axis **532** is position perpendicular to the first axis 530 and runs substantially along a second centerline normal to the first centerline of the assembly **112.**

The reflective surface **528** is coupled to the top of the mirror collection plate **510.** In this manner, dual-axis rotation of the mirror collection plate **510** about the axes **530, 532** causes incident light from a light source (not shown) to reflect off of the reflective surface **528** in a plurality of directions.

The reflective surface **528** may be comprised of any number of conventional commercially available optically reflective surfaces such as, for example, gold, silver or aluminum.

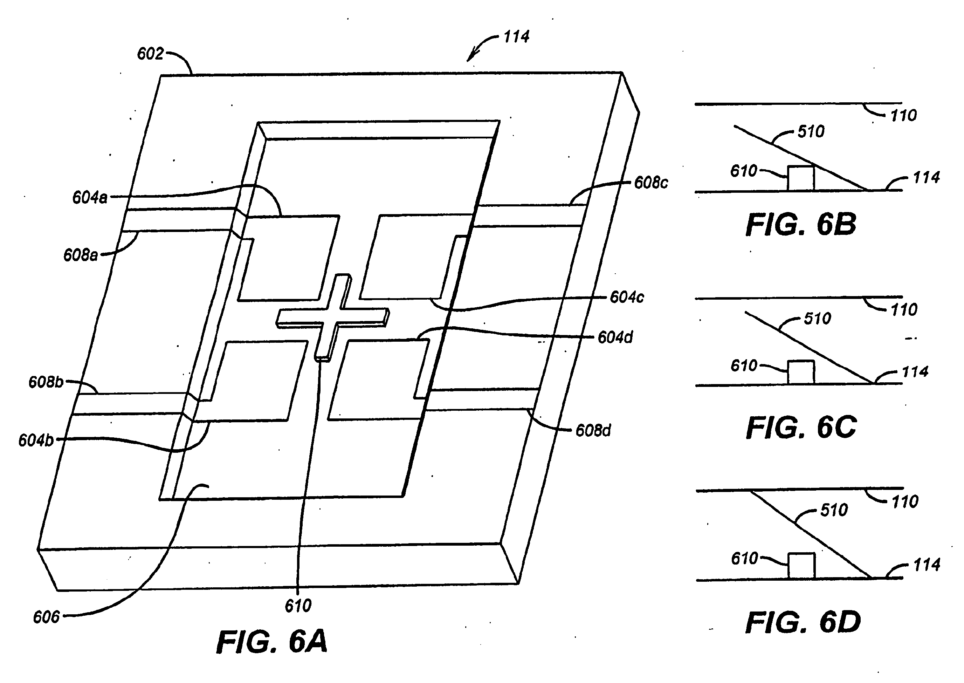

**Fig. 6A** is an isometric view of the bottom cap **114.** The bottom cap **114** includes a plurality of electrodes **604a-d** positioned within a cavity **606** formed in the surface **602** of the bottom cap **114.** Each electrode has an associated conductive lead **608a-d** extending from the electrode to a perimeter location on the bottom cap **114.** In operation, the leads are connected to an electrical power source (not shown) adapted to provide electrical power to any combination of electrodes. The bottom cap also includes an optional damping baffle **610.** The damping baffle is a movement control structure that provides airflow resistance to mirror movement for tuning damping. In one embodiment, the damping baffle acts as a pedestal for arresting vertical movement of the mirror when energy is applied to the electrodes **604a-d** alone. The pedestal assists in converting the vertical movement into rotational movement about one or more axes.

As discussed above the mirror function is to assume one of several discrete positions upon application of energy to top cap and bottom cap electrodes. Damping is a function of several manufacturing characteristics and parameters. Among these are materials selected, material thickness, hinge shape, viscosity of internal fluid (e.g. amount and purity of air trapped within the assembly) and so forth. A severely underdamped mirror will tend to overshoot the desired position and then settle into the desired position after several oscillations. A severely overdamped mirror will move toward the desired position much too slowly for practical optical switching application. Therefore, damping movement control is desirable. A damping level called critical damping is desired to arrest mirror movement while providing quick response. A critically-damped mirror will quickly move to the selected position without overshooting or oscillation.

It is important to note that the damping baffle **610** may be constructed as desired to either contact the mirror collection plate **510** during operation or to not contact the mirror collection plate **510.** **Fig. 6B-D** illustrate this point. **Fig. 6B** shows an embodiment wherein the mirror **510** contacts the damping baffle **610** and the bottom cap **114** to effect one of the discrete switching states. **Fig. 6C** shows an alternative embodiment of a mirror assembly in the same switching state, but the mirror **510** only contacts the bottom cap **114,** and does not contact the damping baffle **610** or the top cap **110.** **Fig. 6D** shows a preferred embodiment in which the mirror **510** is in the same switching state and contacting the top cap **110** and the bottom cap **114,** but is not in contact with the damping baffle **610.** Each embodiment is constructed by selecting the dimensions of the damping baffle and mirror to create the desired embodiment.

In a particularly useful embodiment of the present invention the mirror array assembly **108** may be combined with substantially similar assemblies to effectively multiply the number of digital optical switching states from any number of output paths. Using the exemplary 8-state embodiment of the digital mirror apparatus **100** described above and shown in **Figs. 1A-1C****,** a single input or incident beam of light may be digitally switched to 8ⁿ output paths thereby creating a 1x8ⁿ digital switch assembly. Here, n is an integer value defined by the number of mirror assemblies cascaded.

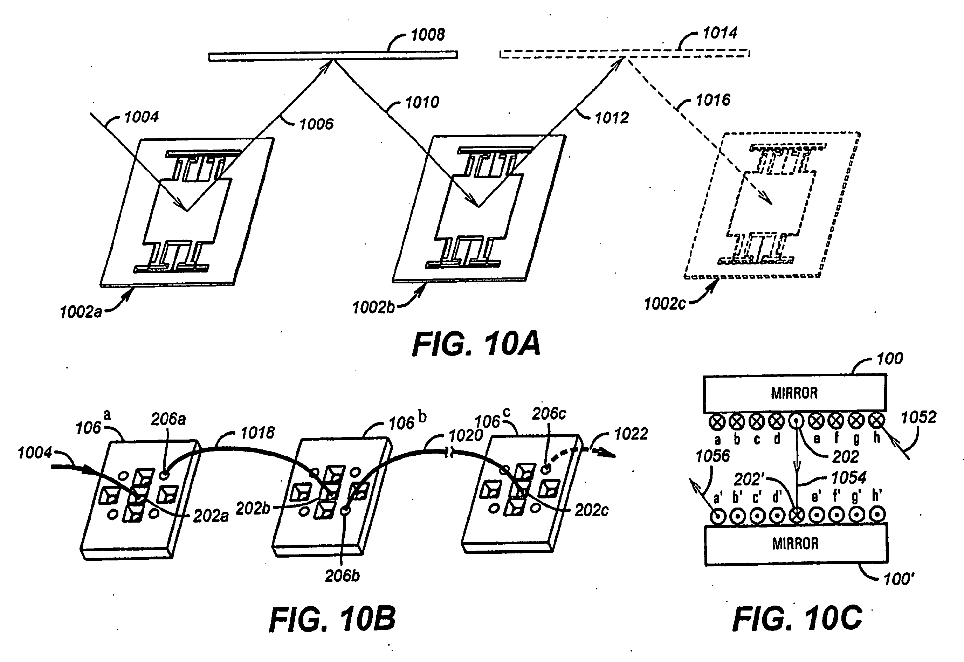

A simple conceptual illustration is provided in **Fig. 10A****.** Shown is a cascaded series of mirror assemblies **1002a-c.** An incident light **1004** reflects from a first mirror assembly **1002a** along a first exit path **1006** to meet a reflector **1008.** The reflector **1008** is a fixed reflective surface formed using substantially identical micro-machining process as described in process **700.** A light reflects from the reflector **1008** along a selected 1 of 8 discrete paths to meet another digital optical switch mirror assembly **1002b.** Each one of the 8 paths preferably leads to a substantially similar mirror **1002b,** but only 1 is shown for illustration of the invention. In turn, and limited by the number of cascaded mirror assemblies, a light reflects from the second mirror along a selected 1 of 8 paths **1012** and so forth to a plurality of cascaded reflectors **1014** and switches **1002c.** Note that the number of states described as 8" is defined as the maximum number of output states of an 8-state digital optical switch. Although an 8-state digital mirror is a preferred embodiment of the apparatus **100** of the present invention, any digitally-positioned mirror as the term digital is defined herein is contemplated by the present invention. Thus the actual number of digital switching positions is better defined as X^{y} states, where X is the number of positions possible by a mirror assembly and y is the number of cascaded mirrors. Theoretically, the positioning capability of any one mirror is not determinative of the number of possible positions of any one cascaded mirror. So, any number of digital switch output states is within the scope of the present invention. Thus a 1 x A digital switch apparatus, wherein A is any integer greater than 1 is contemplated.

Once cascading is understood, parallel configurations of digital optical switching arrays then logically follow. In this alternative embodiment, a 1 X8ⁿ cascade may be packaged in parallel with any number of similar array cascades to form an M x 8ⁿ digital optical switch, where M is an integer formed by the number of cascades packaged in parallel.

In an alternative cascaded embodiment, the reflectors 1008 and **1014** are not used. In this alternative embodiment, light coupling is accomplished by optic fibers **1018, 1020** and **1022** etc. and light guide overlays **106.** Referring to **Fig. 2** and **Fig. 10B****,** incident light travels along path **1004** to enter the first mirror **1002a** via incident light port **202a** of the first mirror overlay **106a.** Note that incident light path **1004** may or may not be an optic fiber. Light exits the first assembly **1002a** via an exit port **206a** and travels along an optic fiber light path **1018** to enter 1 of 8 mirror assemblies **1002b** via an incident light port **202b** of the second mirror overlay **106b.** The light exits the second mirror assembly **1002b** through overlay exit **206b.** Exiting light travels to the next cascaded mirror assembly **1002c** via another optic fiber **1020** to enter incident light port **202c.** The reflection is repeated for cascaded assemblies and any number of fiber optic paths **1022** may be used.

**Fig. 10C** is a schematic representation of an alternative cascaded embodiment of the present invention. Those skilled in the art would recognize that light is reversible. Therefore, any exit port described hereinabove can also be an incident light port. Shown is an 8X8 optical switch **1050** comprising a first mirror assembly **100** coupled to a second mirror assembly **100',** which is substantially identical to the first mirror assembly **100.** The mirror assemblies **100** and **100'** are positioned, either separately or in a package, in a face-to-face relationship.

For simplicity of illustration, input ports are illustrated as a circle with an "X" in the circle, and each output port (internal and external to the package) is represented by a circle with a center dot. Each mirror assembly **100** and **100'** is as described above and shown in Figs. 1 A-6. The two mirror assemblies are mounted in a face-to-face relationship to operate as a digital 8X8 optical switch having 8 discrete input ports **206a-206h** and 8 discrete exit ports **206a'-206h'.**

An incident light beam **1052** enters one of the 8 incident light ports. The beam **1052** is switched according to the present invention within the first assembly **100** by a first mirror collection plate (not separately shown). The reflected beam then exits the first mirror assembly **100** through a first assembly exit port 202 as an internal incident light beam **1054** for the second assembly **100'.** The internal beam **1054** enters the second assembly **100'** through an incident light port **202'.** A not-shown mirror according to the present invention described above disposed in the second assembly **100'** operates according to the present invention to switch the internal beam **1054** toward one of the 8 exit ports **206a'-206h'** as shown to create an exiting light beam **1056.**

A process according to a preferred embodiment of the present invention for manufacturing a three dimensional MEMS apparatus will now be described. **Figs. 7A-7C** show an exemplary micro-machining process **700** used in the manufacture of a three-dimensional MEMS device such as the digital optical switch apparatus **100** described above and shown in **Figs. 1-6** and **10.** For clarity, the apparatus **100** is shown in cross section at several processing stages. This process **700** is separated into a bottom cap process **710,** a top cap process **720** and a three-stack merged mirror process **730.** The process **700** will be explained as a sequence of steps for clarity and ease of understanding. The use of sequential steps for purposes of explanation, however, should not be taken as a limitation of the scope of present invention to any particular manufacturing sequence.

Those skilled in the art will appreciate the novel processes used without the need for detailed description of known etching techniques. Thus, discussion of the techniques will be limited to direct attention on the process steps, which are the main focus of the invention.

Those skilled in the art will recognize an etching technique known as deep reactive ion etching, referred to as DRIE or DRIE etch. Also known in the art of MEMS based devices is the use of an epitaxial layer for providing desired electrical properties. Also known in the art is the use of boron doping techniques for providing desired electrical and mechanical properties. Doping is referred to as highly or heavily doped denoted by p++ or doping may be referred to as moderately doped denoted by p+. Doping layers of p++ or p+ are selected depending upon electrical properties desired and is also used as an etch-stop technique during the micro-machining fabrication processes. The high doping of these wafers provides enhanced, ohmic electrical contact between the doped wafers.

Referring now to **Fig. 7A****,** the bottom cap process **710** begins with a substrate **7100** such as a 400 to 700 micron thick single-side polished (SSP) silicon wafer. An oxide insulating layer **7102** is applied, and then KOH etching is performed to create a 1- to 100 micron deep recess **7104** in an upper surface of the wafer.

Metal electrodes **7106** and metal pads **7108** are formed by known metal disposition techniques. The electrodes are patterned using, for example, thick resist.

A resistant glass layer **7110** is then applied to the top of the bottom cap in preparation for bonding the bottom cap to the mirror assembly. The glass layer is applied using evaporation, sputter or spin-on techniques known in the art.

Referring now to **Fig. 7B****,** the top cap is formed according to the process **720** by providing a 400 to 700 micron thick double-side polished (DSP) silicon wafer **7202** with an oxide patterned mask **7204.** KOH is then used to etch a top gap **7206** of 10 to 100 microns in the lower surface of the wafer **7202.**

A second pattern mask **7208** is applied to an upper surface of the wafer **7202.** Timed etching is performed using KOH to create an initial window **7210** in the top cap wafer **7202.** The etching is stopped such that an approximately 1 to 50 micron section **7212** remains to maintain top cap wafer structural integrity for further processing steps. An advantage in this process is that the delicate mirror mechanisms are sealed and protected from potentially damaging process steps such as the dicing operation.

Top cap or top-side electrodes **7220** are created by depositing electrically conductive metal layers of 50 to 200 angstrom thick chrome (Cr) and then 500 to 800 angstrom thick gold (Au) or of Ti and Au of similar thickness, respectively. These layers also serve as mechanical bonding pads, although it is desirable to keep bond pads and conductive electrodes electrically isolated from each other in multi-electrode multi-tiered devices such as in the present invention.

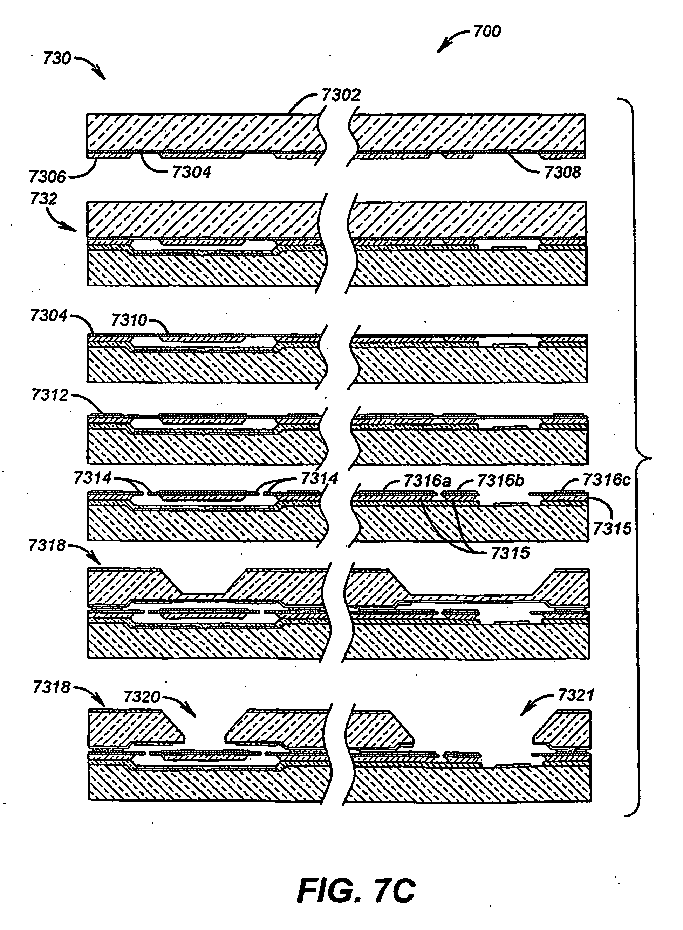

**Fig. 7C** shows the process of the mirror assembly and apparatus completion stages, which are collectively referred to as the mirror process **730.** The mirror assembly process begins with a 400 to 700 micron DSP epi silicon wafer **7302.** The wafer **7302** is heavily doped with a p++ epi beam layer **7304** having a preferred thickness of about 1 to 10 microns. A lightly doped p+ structural layer **7306** is then applied over the beam layer **7304.** The structural layer **7306** affects damping and the thickness should be selected along with other parameters to achieve critical damping for the overall structure. The structural layer **7306** is then masked, and etched using KOH etching to expose portions **7308** of the beam layer **7304.** This portion of the process will enable creation of electrically isolated islands **7316a-c,** which will be described in more detail later.

At **732,** the mirror and bottom electrode wafer are then bonded using anodic bonding. If, however, the electrodes are initially formed by depositing layers of Cr and Au (respective thickness of 50-200 and 500-8000 Angstroms), then the preferred bonding technique is Au eutectic or thermal compression bonding. The mirror wafer **7302** is then thinned using KOH etching to expose an upper surface **7310** of the p++ layer **7304.** Mirror metal **7312** is deposited on the exposed surface **7310.**

Metal film stress can cause a MEMS mirror to exhibit bowing when thermally stressed, thereby resulting in loss of optical properties. Therefore, in one embodiment, the mirror wafer 7302 is preferably coated with mirror metal 7212 on both sides of the mirror. By coating both sides of the mirror with the same metal, thermal stress is more balanced and the mirror will exhibit less bowing. This embodiment is preferred when expected operational environments include wide temperature range.

A pattern mask is applied and DRIE etching is used to form beams **7314** and to form bond pad islands **7316.** This provides electrically isolated electrodes, which are now separated by non-conductive air gaps.

The top cap electrode wafer is then bonded to the mirror wafer using a thermocompression bonding technique to form a three-tier stack **7318.** The stack **7318,** which as described above and shown in **Fig. 1B** comprises a plurality of mirror assemblies, is then diced to the desired number of mirror assemblies e.g. 1 to 8 or more. During the dicing portion of the process **700,** all sensitive cavity areas of the stack are still sealed by remaining wafer portions **7212** and **7213.** This technique provides the advantage of maintaining a non-contaminated environment for the sensitive areas e.g the mirror. After dicing, the remaining sealed cavities are opened, e.g. the window areas, by dry etching. Dicing techniques are well known and thus do not require detailed description here.

Known techniques such as providing tape over sensitive areas during dicing might be used without eliminating the inventive nature of the present process. These techniques however are more time-consuming and thus less desirable.

Now, blanket Si etching is performed to open a mirror window **7320** and bond pad window **7321** to expose the bond pads **7316** at the die level. At this point, a three dimensional multi-tier structure having multi-tier electrodes has been formed using planar machining techniques.

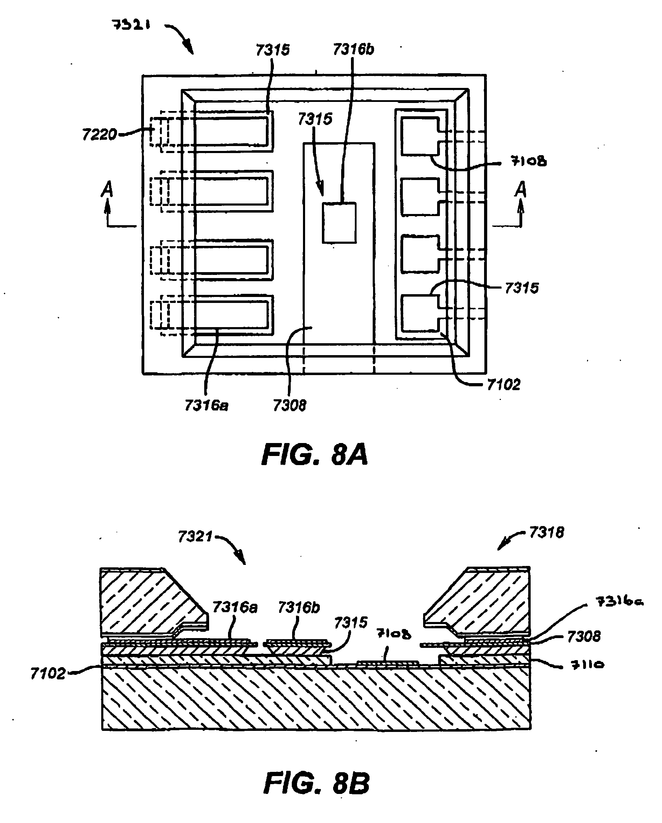

Referring now to **Figs. 7A-C** and **Figs. 8A-B** an important manufacturing advantage will be described. **Fig. 8A** shows a top view of a bond pad region in an embodiment of the present invention. Shown is the bond pad window **7321** and the several bond pad islands **7315** created during the manufacturing processes **730.** It is readily apparent that top cap electrical bond pads **7316a,** mirror bond pad **7316b** and bottom cap electrode bond pads **7108** are all accessible from a single direction for final packaging and assembly through the bond pad window **7321.** One performing the final manufacturing process simply bonds appropriate electrical leads (such as leads **104** described above and shown in **Fig. 1A** to each bond pad

**Fig. 8B** is a cross section view along the plane **A-A** of **Fig. 8A** to provide a view to clearly show some of the features. Shown are the three-tier stack assembly **7318** and the bond pad window **7321,** which provides easy access to pads for final assembly and packaging. For comparison without limitation, the bond pad window **7321** might be manufactured as the bond pad window **118** described above and shown in **Fig. 1** **B.** Recall that the stack **7318** is manufactured using a fully planar process **700** according to the present invention. That is, there is no requirement in the process to rotate or flip any individual wafer or the stack in order to create the multi stack assembly shown. Moreover, the process provides an assembly having bond pads for each level of the stack accessible from one side through a bond pad window. In the embodiment shown, the bond pad window **7321** is on the top cap side of the assembly. Those skilled in the art having the benefit of the present disclosure would recognize that the top cap bond pad window is merely illustrative of the embodiment shown and does not limit the invention to having access only through a top cap bond pad window.

The top cap bond pad window **7321** provides access to the bottom cap electrode bond pad **7108** to the mirror wafer electrode bond pad **7316b,** and to the top cap electrode bond pad **7316a.**

The figure also shows how layering is used to provide the three-dimensional structure using a planar process. The glass layer **7110** is shown on top of the bottom cap and between the bottom cap and the mirror wafer. The bond pads **7316c** are on the glass layer **7110.** The p++ epi silicon islands **7315** are formed from a layer of p++ epi silicon layer on the mirror wafer as shown. The mirror bond pad **7316b** is substantially coplanar with the top cap electrode bond pad **7316a.** The top cap electrode is connected to the top cap electrode bond pad **7316a** via electrical bonding between the top cap electrical feed through **7220.**

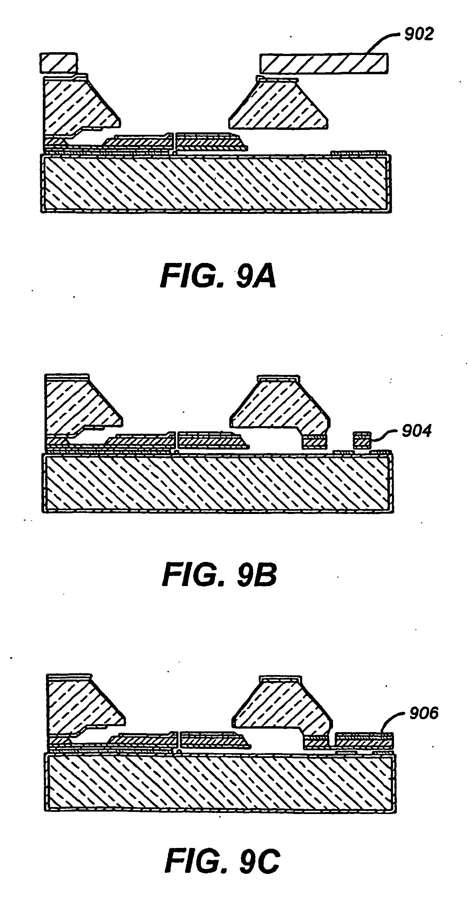

**Figs. 9A-9C** show a shadow-masking portion of the process 700 according to an embodiment of the present invention. Creating bond pads in typical fashion can be quite complicated, time consuming and costly. A shadow mask is a portion of wafer material having a primary function of covering an area of a wafer surface. During metal deposition, such as for creating electrodes, metal is deposited on all surfaces in a substantially line-of-sight relationship with the direction of deposit. Typically, these are all upper surfaces. Thus, any area covered by a shadow mask does not receive sufficient metal deposits to create unwanted electrical short circuit paths.

Bond pad deposition according to the present invention may be accomplished using several embodiments of the process **700.** One embodiment provides depositing metal directly to the bond-pad region using an exterior shadow mask **902.** In this manner electrode bond pads are shielded from metal depositions to avoid shorting. The shadow mask **902** is not part of the stack, thus is removed during the manufacturing process immediately after metal deposition.

In another embodiment, an in-situ shadow mask **904** is created in the mirror assembly during the etching processes **720** that prevents metal from depositing in areas between electrodes. In this embodiment, the shadow mask **904** remains in the completed assembly.

Still in another embodiment, a frangible beam-like in-situ shadow mask is created in the mirror layer. This shadow mask shields bond pads from metal depositions that can create electrical short circuits. The shadow mask shield **906** are easily broken and removed after metal deposition using a typical manufacturing tool such as a vacuum pick.

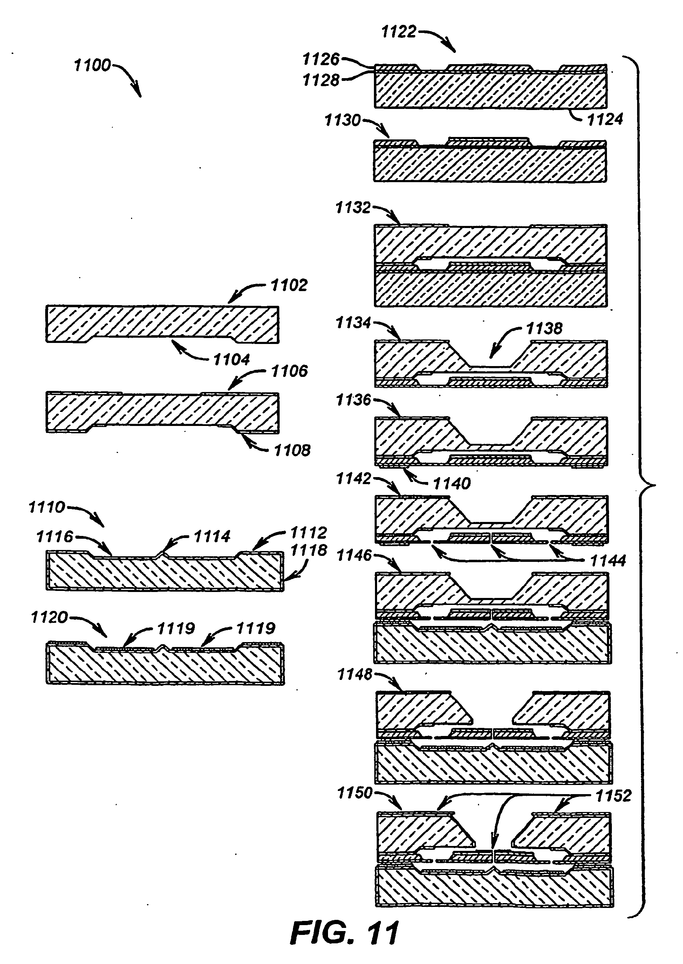

Another embodiment of the process of the present invention provides inverted mirror manufacturing to allow alternate electrode routing and to provide a moderately doped p+ layer on which the mirror surface is formed. This process has the advantage of a smoother mirror surface at the microscopic level. The process **1100** is shown by illustration in **Fig. 11****.**

Shown is the process **1100** beginning with a top cap wafer at **1102.** The 400-700 micron wafer is provided with a Si oxide mask. A pattern mask is applied and a recess **1104** if etched using KOH etching. At **1106** a window mask is applied and top cap electrode bond pads **1108** are attached to the wafer.

The bottom cap starts at **1110** with a silicon SSp wafer **1112.** A Si Oxide mask is applied for etching of a recess **1116** and for forming a cross-shaped baffle **1114** in a top surface of the bottom cap. An oxide insulation layer **1118** is then applied to the bottom cap surface.

Electrodes **1119** are then formed in the recess **1116** at **1120** by metal deposition techniques as described on process **700.**

The mirror wafer begins at **1122** by providing a DSP wafer **1124.** An epi p++ beam layer **1128** is applied and then a p+ structural layer **1126** is applied. A pad layer is provided using an oxide layer and a nitride layer. The pad layer is then masked and etched.

The nitride is then stripped and patterned leaving oxide on mirror surfaces **1130.** The mirror oxide is broken up to clear DRIE lanes.

At **1132,** the top cap and mirror wafers are bonded using fusion bonding, and at **1134** the mirror substrate is thinned to the p++ layer in KOH. The top cap is etched to form the windows **1138** (only mirror window shown in this view). As shown a portion of the window **1138** remains sealed for further processes.

At **1136** bond metal **1140** is deposited and patterned. The metal is preferably layered Ti and Au as discussed above with process **700.** At **1142** pattern masking and etching is performed with beam-mirror separation mask to separate beams and mirror areas at several locations **1144.**

The bonded top cap and mirror wafers are then bonded to the bottom cap at **1146** using thermocompression, and at **1148,** the window **1138** is opened using blanket Si etch.

The stack is completed at **1150** by sputtering layers of Ti and Au **1152** using the shadow masking of **Figs. 9A-C** to shield the bond pad window.

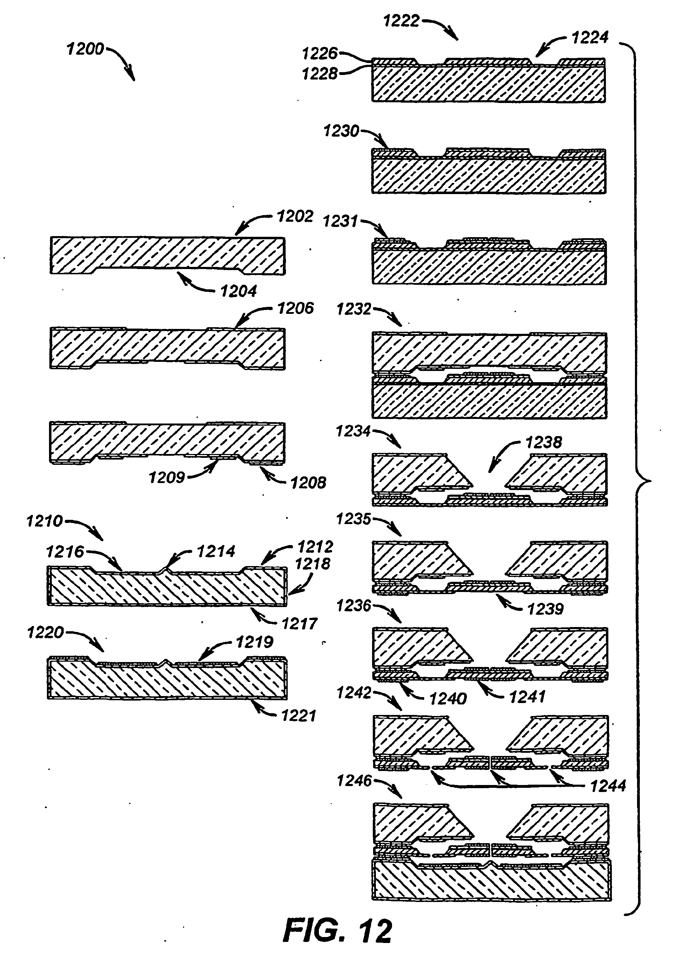

**Fig. 12****.** is an alternative process embodiment with inverted mirror manufacturing to allow alternate electrode routing and to provide a moderately doped p+ layer on which the mirror surface in formed. The process **1200** illustrated in **Fig. 12** has the advantage of a smoother mirror surface at the microscopic level. As much of the detailed bonding and depositions are substantially similar to the like processes described above, only the more general steps are described here for brevity.

Shown is the process **1200** beginning with a top wafer at **1202.** The 400-700 micron wafer is provided with a Si oxide/nitride mask. A pattern mask is applied and a recess **1204** is etched using KOH etching. A window mask is applied **1206,** and top cap electrode **1207** and bond pads **1208** are attached to the wafer.

A bottom cap starts at **1210** with a silicon SSP wafer **1212.** A Si oxide/nitride mask is applied for etching of a recess **1216** and for forming a cross-shaped baffle **1214** in a top surface of the bottom cap. An oxide/nitride insulation layer **1218** is then applied to the bottom cap surface.

Electrodes **1219** are then formed in the recess **1216** at **1220** by metal deposition techniques as described on process **700.**

The insulation layer **1217** on the backside of the wafer **1212** is removed. The metal layer **1221** is then formed in the backside of the wafer **1212** by metal deposition techniques as described above and shown in process **700.**

The mirror wafer begins at **1222** by providing a DSP wafer **1224.** An epi p++ beam layer **1228** is applied and then a p+ structural layer **1226** is applied. A pad layer **1230** is provided using an oxidation and a nitride layer. The pad layer is then masked and etched.

The bond metal **1231** is deposited and patterned.

At **1232** the top cap and mirror wafers are bonded using thermocompression bonding, and at **1234** the mirror substrate is thinned to the p++ layer in KOH. The top cap is etched to form the windows **1238** (only mirror window shown in this view).

At **1235** portion of the p++ layer on the backside of the mirror **1239** is removed, and, at **1236** metal layer **1241** is deposited on the backside of the mirror. This process minimizes the warping of the mirror.

At **1236** bond metal **1240** is also deposited and patterned.

At **1242** pattern masking and etching is performed with beam-mirror separation mask to separate beam and mirror areas at several locations **1244.**

The process is completed at **1246** by bonding the bond top cap and mirror wafers and the bottom cap using thermocompression.

The foregoing description is directed to particular embodiments of the present invention for the purpose of illustration and explanation. It will be apparent, however, to one skilled in the art that many modifications and changes to the embodiment set forth above are possible without departing from the scope of the invention as set forth in the following claims.

## Claims

1. A multi-tiered micro-machined device having at least three tiers, comprising:
a first top water tier (110) having one or more electrically conductive first leads (7220) connecting top cap electrodes 400a, 400b) on the bottom ride of the first wafer tier;
a second bottom wafer tier (114) having one or more electrically conductive second leads (7106,7108) connecting bottom cap electrodes (604a, 604b and
a middle wafer tier (112) coupled between the first wafer tier (110) and the second wafer tier (114), the middle wafer tier including:
a mirror (528) capable of rotating upon application of electrical energy to a top cap electrode (400a, 400b) and/or a bottom cap electrode (604a, 640b);
top cap electrical bond pads (7316a); and
a mirror bond pad (7318b) electrically isolated from the top cap electrical bond pads (7316a);
wherein the top cap electrical bond pads (7316a) make contact with the one or more first leads (7220) when the middle wafer tier (112), the first wafer tier (110) and the second wafer tier (114) are coupled;
**characterised by** further comprising:
a bond pad window (118) in the first wafer tier (110) providing access to the top cap electrical bond pads (7316a) and the mirror bond pad (7316b) of the middle wafer tier (112) and the one or more second leads (7108) of the second wafer tier (114).

2. A device according to claim 1, wherein:
the one or more first leads (7220) are electrical interconnects for connecting to electrical components disposed on the first wafer tier (110); and
the one or more second leads (7108) are electrical interconnects for connecting to electrical components disposed on the second wafer tier (114), and are preferably bond pads for connecting the second wafer tier (114) to external devices.

3. A device according to claim 1 or 2, wherein the middle wafer tier (112) further comprises a frame (500) attached to the first wafer tier (110) and to the second wafer tier (114).

4. A device according to claim 3, wherein the mirror (528) is constituted by a gimbaled microstructure (510) suspended from the frame (500).

5. A device according to claim 4, wherein the gimbaled microstructure (510) includes an electrically conductive portion.

6. A device according to claim 5, wherein the gimbated microstructure (510) provides a moving electrode energized by at least one of the top cap electrical bond pads (7316a) and the mirror bond pad (7316b) of the middle wafer tier (112).

7. A device according to any preceding claim, wherein the top cap electrical bond pads (7316a) comprise one or more bond pads for connecting the first wafer tier (110) to external devices.

8. A device according to any preceding claim, wherein the mirror bond pad (7316b) comprises one or more bond pads for connecting the middle wafer tier (112) to external devices.

9. A planar fabrication method for creating a multi-tiered micro-machined device having at least three tiers, the method comprising:
a) fabricating (720) a first top wafer tier (110) having one or more electrically conductive first leads (7220) connecting top cap electrodes (400a, 400b) on the bottom ride of the first wafer tier;
b) fabricating (710) a second bottom wafer tier (114) having one or more electrically conductive second leads (7106,7108) connecting bottom cap electrodes (604a, 604b);
c) fabricating (730, 732) a middle wafer tier (112) including:
a mirror (528) capable of rotating upon application of electrical energy to a top cap electrode (400a, 400b) and/or a bottom cap electrode (604, 604b);
top cap electrical bond pads (7316a); and
a mirror bond pad (7316b) electrically isolated from the top cap electrical bond pads (7316a): and
d) coupling the middle wafer tier (112) between the first wafer tier (110) and the second wafer tier (114) such that the top cap electrical bond pads (7316a) make contact with the one or more first leads (7220) when the middle wafer tier (112), the first wafer tier (110) and the second wafer tier (114) are coupled;
**characterised by** further comprising:
e) fabricating (7321) a bond pad window (118) in the first wafer tier (110) to provide access to the top cap electrical bond pads (7316a) and the mirror bond pad (7316b) of the middle wafer tier (112) and the one or more second leads (7108) of the second wafer tier (114).

10. The method of claim 9, wherein, prior to coupling the wafer tiers, fabricating (710) the second wafer tier (114) comprises:
i) providing a second wafer substrate (7100);
ii) applying an insulating layer (7102) to the second wafer substrate (7100); and
iii) depositing an electrically conductive metal on at least a portion of the insulating layer (7102) to form the one or more second leads (7106,7108).

11. The method of claim 9, wherein, prior to coupling the wafer tiers, fabricating (720) the first wafer tier (110) comprises:
i) providing a first wafer substrate (7202);
ii) etching an initial window (7211) into the substrate (7202) without completely penetrating the first wafer substrate (7202);
iii) applying an insulating layer (7216,7218) to one side of the first wafer substrate (7202); and
iv) depositing electrically conductive metal on at least a portion of the insulating layer (7216,7218) to form the one or more first leads (7220).

12. The method of claim 9, wherein, prior to coupling the wafer tiers, fabricating (730, 732) the middle wafer tier (112) comprises:
i) providing a middle wafer tier substrate (7302);
ii) applying a structural layer (7304,7306) to the middle wafer substrate (7302); and
iii) etching portions (7308) of the structural layer (7304,7306) to create one or more electrically isolated islands.

13. The method of claim 9, wherein the middle wafer tier (112) is coupled to the second wafer tier (114) before coupling the first wafer tier (110) to an opposite side of the middle wafer tier (112).

14. The method of claim 13, wherein, prior to coupling the middle wafer tier (112) to the second wafer tier (114), fabricating the second wafer tier comprises:
i) providing a first wafer substrate (7100);
ii) applying an insulating layer (7102) to the second wafer substrate (7100);
iii) depositing an electrically conductive metal (7106,7108) on at least a portion of the insulating layer (7102);
fabricating the middle wafer tier (112) comprises:
iv) providing a middle wafer substrate (7302);
v) applying a structural layer (7304,7306) to the middle wafer substrate (7302);
vi) etching portions (7308) of the structural layer (7304,7306) to create one or more electrically isolated islands;
fabricating the first wafer tier (110) comprises:
vii) providing a first wafer substrate (7202);
viii) etching an initial window (7211) into the substrate (7202) without completely penetrating the first wafer substrate (7202);
ix) applying an insulating layer (7216,7218) to one side of the first wafer substrate (7202);
x) depositing electrically conductive metal (7220) on at least a portion of the insulating layer (7216,7218);
the method then comprising:
e) bonding the middle wafer tier (112) to the second wafer tier (114);
f) thinning the middle wafer substrate (7302);
g) etching a portion (7314) of the middle wafer structural layer (7304,7306) to provide access to the one or more second leads (7108);
h) depositing metal (7312) to remaining portions of the structural layer (7304,7306) to form the top cap electrical bond pads (7316a) and the mirror bond pad (7316b);
i) bonding the first wafer tier (110) to the middle wafer tier (112); and
j) etching the initial window (7211) through the first wafer substrate (7202) to form a window (7321) providing access to the top cap electrical bond pad (7316a) and the mirror bond pad (7316b) through the window.

15. The method of claim 9, wherein the middle wafer tier (112) is coupled to the first wafer tier (110) before coupling the second wafer tier (114) to an opposite side of the middle wafer tier (112).

16. The method of any of claims 9 to 15, wherein the mirror (528) is constituted by a moveable microstructure (510) fabricated on a portion of the middle wafer tier (112).

17. The method of claim 16, further comprising forming a recess (7104,7206) in each of the first (110) and second (114) wafer tiers to allow movement of the microstructure (510).

18. The method of claim 17, further comprising forming a movement-control structure in the second wafer recess (7104) to control movement of the microstructure (510).

19. The method of claim 9, wherein:
i) fabricating the second wafer tier (114) includes etching a portion of a second wafer substrate (7100) to form a second recess (7104) having a movement-control structure and depositing metal in at least the second recess to form the second leads (7106);
ii) fabricating the first wafer tier includes etching a portion of a first wafer substrate (7202) to form a first recess (7206) and depositing metal on at least one surface of the first wafer tier (110) to form the first leads (7220); and
iii) the mirror (528) is constituted by a gimbaled microstructure (510) moveable in the first (7206) and second (7104) recesses when energy is applied to the first (7220) and second (7106) leads.

20. The method of claim 19, wherein, prior to coupling the wafer tiers, fabricating the middle wafer tier comprises:
i) providing a middle wafer substrate (7302);
ii) applying a first structural layer (7304) to the middle wafer substrate (7302);
iii) applying a second structural layer (7306) to the first structural layer (7304); and
iv) etching portions (7308) of the second structural layer (7306) to create one or more electrically isolated islands.

21. The method of claim 20, comprising:
i) coupling the middle wafer tier (112) to the first wafer tier (110);
ii) thinning the middle wafer substrate (7302) to the first structural layer (7304);
iii) etching an initial window (7210) in the first wafer substrate (7202) leaving a portion of the substrate in place;
iv) depositing metal (7312) on the thinned middle wafer substrate to form bond pads (7316);
v) separating the first structural layer (7304) at selected locations to allow movement;
vi) coupling the second wafer tier (114) to the middle wafer tier (112) opposite the first wafer tier (110); and
vii) etching the first wafer substrate (7202) at the initial window to open a window (7320) for accessing the microstructure (510).

22. The method of claim 19, wherein, prior to coupling the wafer tiers, fabricating the middle wafer tier comprises:
i) providing a middle wafer substrate (7302);
ii) applying a first structural layer (7304) to the middle wafer substrate (7302);
iii) applying a second structural layer (7306) to the first structural layer (7304);
iv) etching portions (7308) of the second structural layer (7306) to create one or more electrically isolated islands; and
v) depositing metal (7312) on the islands for electrical bonding.

23. The method of claim 22, comprising:
i) coupling the middle wafer tier (112) to the first wafer tier (110);
ii) thinning the middle wafer substrate (7302) to the first structural layer (7304);
iii) etching the first wafer substrate (7202) to form a window (7320) for accessing the microstructure (510);
iv) depositing metal (7312) on the thinned middle wafer substrate to form bond pads (7316);
v) separating the first structural layer (7304) at selected locations (7314) to allow movement; and
vi) coupling the second wafer tier (114) to the middle wafer tier (112) opposite the first wafer tier (110).

## Patentansprüche

1. Mehrlagige mikrobearbeitete Vorrichtung mit wenigstens drei Lagen, die Folgendes umfasst:
eine erste obere Wafer-Lage (110) mit einer oder mehreren elektrisch leitenden ersten Leitungen (7220), die obere Kappenelektroden (400a, 400b) auf der unteren Seite der ersten Wafer-Lage verbinden;
eine zweite untere Wafer-Lage (114) mit einer oder mehreren elektrisch leitenden zweiten Leitungen (7106, 7108), die untere Kappenelektroden (604a, 604b) verbinden; und
eine mittlere Wafer-Lage (112), die zwischen der ersten Wafer-Lage (110) und der zweiten Wafer-Lage (114) gekoppelt ist, wobei die mittlere Wafer-Lage Folgendes enthält:
einen Spiegel (528), der sich drehen kann, wenn in eine obere Kappenelektrode (400a, 400b) und/oder eine untere Kappenelektrode (604a, 604b) elektrische Energie eingegeben wird;
obere elektrische Kappenkontaktierungsfelder (7316a); und
ein Spiegelkontaktierungsfeld (7316b), das von den oberen elektrischen Kappenkontaktierungsfeldern (7316a) elektrisch isoliert ist;
wobei die oberen elektrischen Kappenkontaktierungsfelder (7316a) mit der einen oder den mehreren ersten Leitungen (7220) einen Kontakt herstellen, wenn die mittlere Wafer-Lage (112), die erste Wafer-Lage (110) und die zweite Wafer-Lage (114) gekoppelt sind;
**dadurch gekennzeichnet, dass** sie ferner Folgendes umfasst:
ein Kontaktierungsfeldfenster (118) in der ersten Wafer-Lage (110), die einen Zugang zu den oberen elektrischen Kappenkontaktierungsfeldern (7316a) und zu dem Spiegelkontaktierungsfeld (7316b) der mittleren Wafer-Lage (112) und zu der einen oder den mehreren zweiten Leitungen (7108) der zweiten Wafer-Lage (114) schafft.

2. Vorrichtung nach Anspruch 1, wobei:
die eine oder die mehreren ersten Leitungen (7220) elektrische Zwischenverbindungen sind, um elektrische Komponenten, die auf der ersten Wafer-Lage (110) angeordnet sind, zu verbinden; und
die eine oder die mehreren zweiten Leitungen (7108) elektrische Zwischenverbindungen sind, um elektrische Komponenten, die auf der zweiten Wafer-Lage (114) angeordnet sind, zu verbinden, und vorzugsweise Kontaktierungsfelder sind, um die zweite Wafer-Lage (114) mit externen Vorrichtungen zu verbinden.

3. Vorrichtung nach Anspruch 1 oder 2, wobei die mittlere Wafer-Lage (112) ferner einen Rahmen (500) umfasst, der an der ersten Wafer-Lage (110) und an der zweiten Wafer-Lage (114) befestigt ist.

4. Vorrichtung nach Anspruch 3, wobei der Spiegel (528) durch eine kardanische Mikrostruktur (510), die an dem Rahmen (500) aufgehängt ist, gebildet ist.

5. Vorrichtung nach Anspruch 4, wobei die kardanische Mikrostruktur (510) einen elektrisch leitenden Abschnitt umfasst.

6. Vorrichtung nach Anspruch 5, wobei die kardanische Mikrostruktur (510) eine sich bewegende Elektrode bereitstellt, die durch wenigstens eines der oberen elektrischen Kappenkontaktierungsfelder (7316a) und/oder das Spiegelkontaktierungsfeld (7316b) der mittleren Wafer-Lage (112) mit Energie versorgt wird.

7. Vorrichtung nach einem vorhergehenden Anspruch, wobei die oberen elektrischen Kappenkontaktierungsfelder (7316a) ein oder mehrere Kontaktierungsfelder umfassen, um die erste Wafer-Lage (110) mit externen Vorrichtungen zu verbinden.

8. Vorrichtung nach einem vorhergehenden Anspruch, wobei das Spiegelkontaktierungsfeld (7316b) ein oder mehrere Kontaktierungsfelder umfasst, um die mittlere Wafer-Lage (112) mit externen Vorrichtungen zu verbinden.

9. Planares Fertigungsverfahren zum Erzeugen einer mehrlagigen mikrobearbeiteten Vorrichtung, die wenigstens drei Lagen besitzt, wobei das Verfahren Folgendes umfasst:
a) Fertigen (720) einer ersten oberen Wafer-Lage (110) mit einer oder mehreren elektrisch leitenden ersten Leitungen (7220), die obere Kappenelektroden (400a, 400b) auf der unteren Seite der ersten Wafer-Lage verbinden;
b) Fertigen (710) einer zweiten unteren Wafer-Lage (114) mit einer oder mehreren elektrisch leitenden zweiten Leitungen (7106, 7108), die untere Kappenelektroden (604a, 604b) verbinden;
c) Fertigen (730, 732) einer mittleren Wafer-Lage (112), die Folgendes enthält:
einen Spiegel (528) der sich drehen kann, wenn in eine obere Kappenelektrode (400a, 400b) und/oder eine untere Kappenelektrode (604a, 604b) elektrische Energie eingegeben wird;
obere elektrische Kappenkontaktierungsfelder (7316a); und
ein Spiegelkontaktierungsfeld (7316b), das von den oberen elektrischen Kappenkontaktierungsfeldern (7316a) elektrisch isoliert ist; und
d) Koppeln der mittleren Wafer-Lage (112) zwischen der ersten Wafer-Lage (110) und der zweiten Wafer-Lage (114), so dass die oberen elektrischen Kappenkontaktierungsfelder (7316a) mit der einen oder den mehreren ersten Leitungen (7220) einen Kontakt herstellen, wenn die mittlere Wafer-Lage (112), die erste Wafer-Lage (110) und die zweite Wafer-Lage (114) gekoppelt sind;
**dadurch gekennzeichnet, dass** sie ferner Folgendes umfasst:
e) Fertigen (7321) eines Kontaktierungsfeldfensters (118) in der ersten Wafer-Lage (110), um einen Zugang zu den oberen elektrischen Kappenkontaktierungsfeldern (7316a) und dem Spiegelkontaktierungsfeld (7316b) der mittleren Wafer-Lage (112) und zu der einen oder den mehreren zweiten Leitungen (7108) der zweiten Wafer-Lage (114) zu schaffen.

10. Verfahren nach Anspruch 9, wobei vor dem Koppeln der Wafer-Lagen das Fertigen (710) der zweiten Wafer-Lage (114) Folgendes umfasst:
i) Vorsehen eines zweiten Wafer-Substrats (7100);
ii) Aufbringen einer Isolierschicht (7102) auf das zweite Wafer-Substrat (7100);
iii) Ablagern eines elektrisch leitenden Metalls wenigstens auf einem Abschnitt der Isolierschicht (7102), um die eine oder die mehreren zweiten Leitungen (7106, 7108) zu bilden.

11. Verfahren nach Anspruch 9, wobei vor dem Koppeln der Wafer-Lagen das Fertigen (720) der ersten Wafer-Lage (110) Folgendes umfasst:
i) Vorsehen eines ersten Wafer-Substrats (7202);
ii) Ätzen eines anfänglichen Fensters (7211) in das Substrat (7202), ohne vollständig in das erste Wafer-Substrat (7202) einzudringen;
iii) Aufbringen einer Isolierschicht (7216, 7218) auf eine Seite des ersten Wafer-Substrats (7202); und
iv) Ablagern von elektrisch leitendem Metall wenigstens auf einem Abschnitt der Isolierschicht (7216, 7218), um die eine oder die mehreren ersten Leitungen (7220) zu bilden.

12. Verfahren nach Anspruch 9, wobei vor dem Koppeln der Wafer-Lagen das Fertigen (730,732) der mittleren Wafer-Lage (112) Folgendes umfasst:
i) Vorsehen eines mittleren Wafer-Lagen-Substrats (7302);
ii) Aufbringen einer Strukturschicht (7304, 7306) auf das mittlere Wafer-Substrat (7302); und
iii) Ätzen von Abschnitten (7308) der Strukturschicht (7304, 7306), um eine oder mehrere elektrisch isolierte Inseln zu erzeugen.

13. Verfahren nach Anspruch 9, wobei die mittlere Wafer-Lage (112) mit der zweiten Wafer-Lage (114) gekoppelt wird, bevor die erste Wafer-Lage (110) mit einer gegenüberliegenden Seite der mittleren Wafer-Lage (112) gekoppelt wird.

14. Verfahren nach Anspruch 13, wobei vor dem Koppeln der mittleren Wafer-Lage (112) mit der zweiten Wafer-Lage (114) das Fertigen der zweiten Wafer-Lage Folgendes umfasst:
i) Vorsehen eines ersten Wafer-Substrats (7100);
ii) Aufbringen einer Isolierschicht (7102) auf das zweite Wafer-Substrat (7100);
iii) Ablagern eines elektrisch leitenden Metalls (7106, 7108) wenigstens auf einem Abschnitt der Isolierschicht (7102);
das Fertigen der mittleren Wafer-Lage (112) Folgendes umfasst:
iv) Vorsehen eines mittleren Wafer-Substrats (7302);
v) Aufbringen einer Strukturschicht (7304, 7306) auf das mittlere Wafer-Substrat (7302);
vi) Ätzen von Abschnitten (7308) der Strukturschicht (7304, 7306), um eine oder mehrere elektrisch isolierte Inseln zu erzeugen;
das Fertigen der ersten Wafer-Lage (110) Folgendes umfasst:
vii) Vorsehen eines ersten Wafer-Substrats (7202);
viii) Ätzen eines anfänglichen Fensters (7211) in das Substrat (7202), ohne vollständig in das erste Wafer-Substrat (7202) einzudringen;
ix) Aufbringen einer Isolierschicht (7216, 7218) auf eine Seite des ersten Wafer-Substrats (7202);
x) Ablagern von elektrisch leitendem Metall (7220) wenigstens auf einem Abschnitt der Isolierschicht (7216, 7218);
wobei das Verfahren dann Folgendes umfasst:
e) Kontaktieren der mittleren Wafer-Lage (112) mit der zweiten Wafer-Lage (114);
f) Verdünnen des mittleren Wafer-Substrats (7302);
g) Ätzen eines Abschnitts (7314) der mittleren Wafer-Strukturschicht (7304, 7306), um einen Zugang zu der einen oder den mehreren zweiten Leitungen (7108) zu schaffen;
h) Ablagern von Metall (7312) auf verbleibenden Abschnitten der Strukturschicht (7304, 7306), um die oberen elektrischen Kappenkontaktierungsfelder (7316a) und das Spiegelkontaktierungsfeld (7316b) zu bilden;
i) Kontaktieren der ersten Wafer-Lage (110) mit der mittleren Wafer-Lage (112); und
j) Ätzen des anfänglichen Fensters (7211) durch das erste Wafer-Substrat (7202), um ein Fenster (7321) zu bilden, um einen Zugang zu dem oberen elektrischen Kappenkontaktierungsfeld (7316a) und zu dem Spiegelkontaktierungsfeld (7316b) durch das Fenster zu schaffen.

15. Verfahren nach Anspruch 9, wobei die mittlere Wafer-Lage (112) mit der ersten Wafer-Lage (110) gekoppelt wird, bevor die zweite Wafer-Lage (114) mit einer gegenüberliegenden Seite der mittleren Wafer-Lage (112) gekoppelt wird.

16. Verfahren nach einem der Ansprüche 9 bis 15, wobei der Spiegel (528) durch eine bewegliche Mikrostruktur (510), die auf einem Abschnitt der mittleren Wafer-Lage (112) gefertigt ist, gebildet ist.

17. Verfahren nach Anspruch 16, das ferner das Bilden einer Aussparung (7104, 7206) sowohl in der ersten (110) als auch in der zweiten (114) Wafer-Lage umfasst, um eine Bewegung der Mikrostruktur (510) zuzulassen.

18. Verfahren nach Anspruch 17, das ferner das Bilden einer Bewegungssteuerungsstruktur in der zweiten Wafer-Aussparung (7104) umfasst, um die Bewegung der Mikrostruktur (510) zu steuern.

19. Verfahren nach Anspruch 9, wobei:
i) das Fertigen der zweiten Wafer-Lage (114) das Ätzen eines Abschnitts eines zweiten Wafer-Substrats (7100), um eine zweite Aussparung (7104) zu bilden, die eine Bewegungssteuerungsstruktur besitzt, und das Ablagern von Metall wenigstens in der zweiten Aussparung, um die zweiten Leitungen (7106) zu bilden, umfasst;
ii) das Fertigen der ersten Wafer-Lage das Ätzen eines Abschnitts eines ersten Wafer-Substrats (7202), um eine erste Aussparung (7206) zu bilden, und das Ablagern von Metall wenigstens auf einer Oberfläche der ersten Wafer-Lage (110), um die ersten Leitungen (7220) zu bilden, umfasst; und
iii) der Spiegel (528) durch eine kardanische Mikrostruktur (510) gebildet ist, die in der ersten (7206) und der zweiten (7104) Aussparung beweglich ist, wenn in die erste (7220) und in die zweite (7106) Leitung Energie eingegeben wird.

20. Verfahren nach Anspruch 19, wobei vor dem Koppeln der Wafer-Lagen das Fertigen der mittleren Wafer-Lage Folgendes umfasst:
i) Vorsehen eines mittleren Wafer-Substrats (7302);
ii) Aufbringen einer ersten Strukturschicht (7304) auf das mittlere Wafer-Substrat (7302);
iii) Aufbringen einer zweiten Strukturschicht (7306) auf die erste Strukturschicht (7304); und
iv) Ätzen von Abschnitten (7308) der zweiten Strukturschicht (7306), um eine oder mehrere elektrisch isolierte Inseln zu bilden.

21. Verfahren nach Anspruch 20, das Folgendes umfasst:
i) Koppeln der mittleren Wafer-Lage (112) mit der ersten Wafer-Lage (110);
ii) Verdünnen des mittleren Wafer-Substrats (7302) zu der ersten Strukturschicht (7304);
iii) Ätzen eines anfänglichen Fensters (7210) in dem ersten Wafer-Substrat (7202), wobei ein Abschnitt des Substrats zurückgelassen wird;
iv) Ablagern von Metall (7312) auf dem verdünnten mittleren Wafer-Substrat, um Kontaktierungsfelder (7316) zu bilden;
v) Trennen der ersten Strukturschicht (7304) an ausgewählten Stellen, um eine Bewegung zuzulassen;
vi) Koppeln der zweiten Wafer-Lage (114) mit der mittleren Wafer-Lage (112) gegenüber der ersten Wafer-Lage (110); und
vii) Ätzen des ersten Wafer-Substrats (7202) in dem anfänglichen Fenster, um ein Fenster (7320) für einen Zugang zu der Mikrostruktur (510) zu öffnen.

22. Verfahren nach Anspruch 19, wobei vor dem Koppeln der Wafer-Lagen das Fertigen der mittleren Wafer-Lage Folgendes umfasst:
i) Vorsehen eines mittleren Wafer-Substrats (7302);
ii) Aufbringen einer ersten Strukturschicht (7304) auf das mittlere Wafer-Substrat (7302);
iii) Aufbringen einer zweiten Strukturschicht (7306) auf die erste Strukturschicht (7304);
iv) Ätzen von Abschnitten (7308) der zweiten Strukturschicht (7306), um eine oder mehrere elektrisch isolierte Inseln zu erzeugen;
v) Ablagern von Metall (7312) auf den Inseln für eine elektrische Kontaktierung.

23. Verfahren nach Anspruch 22, das Folgendes umfasst:
i) Koppeln der mittleren Wafer-Lage (112) mit der ersten Wafer-Lage (110);
ii) Verdünnen des mittleren Wafer-Substrat (7302) auf die erste Strukturschicht (7304);
iii) Ätzen des ersten Wafer-Substrats (7202), um ein Fenster (7320) für einen Zugang zu der Mikrostruktur (510) zu bilden;
iv) Ablagern von Metall (7312) auf dem verdünnten mittleren Wafer-Substrat, um Kontaktierungsfelder (7316) zu bilden;
v) Trennen der ersten Strukturschicht (7304) an ausgewählten Stellen (7314), um eine Bewegung zuzulassen;
vi) Koppeln der zweiten Wafer-Lage (114) mit der mittleren Wafer-Lage (112) gegenüber der ersten Wafer-Lage (110).

## Revendications

1. Dispositif micro-usiné à plusieurs niveaux présentant au moins trois niveaux et comprenant :
un premier niveau supérieur de galette (110) doté d'un ou de plusieurs premiers conducteurs électriquement conducteurs (7220) qui raccordent des électrodes supérieures de couverture (400a, 400b) situées sur le côté inférieur du premier niveau de galette,
un deuxième niveau inférieur de galette (114) présentant un ou plusieurs deuxièmes conducteurs électriquement conducteurs (7106, 7108) qui raccordent des électrodes inférieures de couverture (604a, 604b) et
un niveau médian de galette (112) raccordé entre le premier niveau de galette (110) et le deuxième niveau de galette (114), le niveau médian de galette comprenant :
un miroir (528) capable de tourner lorsque de l'énergie électrique est appliquée sur une électrode supérieure de couverture (400a, 400b) et/ou sur une électrode inférieure de couverture (604a, 604b),
des parcours (7316a) de liaison électrique de couverture supérieure et
un parcours (7316b) de liaison de miroir isolé électriquement des parcours (7316a) de liaison électrique de couverture supérieure,
les parcours (7316a) de liaison électrique de couverture supérieure assurant le contact avec le ou les différents premiers conducteurs (7220) lorsque le niveau médian de galette (112), le premier niveau de galette (110) et le deuxième niveau de galette (114) sont raccordés,
**caractérisé en ce que** le dispositif comprend en outre :
une fenêtre (118) de parcours de liaison prévue dans le premier niveau de galette (110) et donnant accès aux parcours (7316a) de liaison électrique de couverture supérieure, au parcours (7316b) de liaison de miroir du niveau médian de galette (112) et au deuxième ou aux deuxièmes conducteurs (7108) du deuxième niveau de galette (114).

2. Dispositif selon la revendication 1, dans lequel le ou les premiers conducteurs (7220) sont des interconnexions électriques qui permettent de connecter les composants électriques disposés sur le premier niveau de galette (110) et le ou les deuxièmes conducteurs (7108) sont des interconnexions électriques qui permettent de connecter des composants électriques disposés sur le deuxième niveau de galette (114) et sont de préférence des parcours de liaison qui permettent de connecter le deuxième niveau de galette (114) à des dispositifs externes.

3. Dispositif selon les revendications 1 ou 2, dans lequel le niveau médian de galette (112) comprend en outre un bâti (500) relié au premier niveau de galette (110) et au deuxième niveau de galette (114).

4. Dispositif selon la revendication 3, dans lequel le miroir (528) est formé d'une microstructure (510) suspendue à la Cardan sur le bâti (500).

5. Dispositif selon la revendication 4, dans lequel la microstructure (510) suspendue à la Cardan comprend une partie électriquement conductrice.

6. Dispositif selon la revendication 5, dans lequel la microstructure (510) suspendue à la Cardan présente une électrode mobile alimentée en énergie par au moins l'un des parcours (7316a) de liaison électrique de couverture supérieure et par le parcours (7316b) de liaison de miroir du niveau médian de galette (112).

7. Dispositif selon l'une quelconque des revendications précédentes, dans lequel les parcours (7316a) de liaison électrique de couverture supérieure comprennent un ou plusieurs parcours de liaison qui permettent de connecter le premier niveau de galette (110) à des dispositifs extérieurs.

8. Dispositif selon l'une quelconque des revendications précédentes, dans lequel le parcours (7316b) de liaison de miroir comprend un ou plusieurs parcours de liaison qui permettent de connecter le niveau médian de galette (112) à des dispositifs externes.

9. Procédé de fabrication plane destiné à former un dispositif micro-usiné à plusieurs niveaux présentant au moins trois niveaux, le procédé comportant les étapes qui consistent à :
a) fabriquer (720) un premier niveau supérieur de galette (110) qui présente un ou plusieurs premiers conducteurs électriquement conducteurs (7220) raccordant des électrodes de couverture supérieure (400a, 400b) et prévus sur le côté inférieur du premier niveau de galette,
b) fabriquer (710) un deuxième niveau inférieur de galette (114) doté d'un ou de plusieurs deuxièmes conducteurs électriquement conducteurs (7106, 7108) qui raccordent des électrodes inférieures de couverture (604a, 604b),
c) fabriquer (730, 732) un niveau médian de galette (112) comprenant :
un miroir (528) capable de tourner lorsque de l'énergie électrique est appliquée sur une électrode supérieure de couverture (400a, 400b) et/ou sur une électrode inférieure de couverture (604a, 604b),
des parcours (7316a) de liaison électrique de couverture supérieure et
un parcours (7316b) de liaison de miroir isolé électriquement des parcours (7316a) de liaison électrique de couverture supérieure,
d) raccorder le niveau médian de galette (112) entre le premier niveau de galette (110) et le deuxième niveau de galette (114) de telle sorte que les parcours (7316a) de liaison électrique de couverture supérieure assurent le contact avec le ou les premiers conducteurs (7220) lorsque le niveau médian de galette (112), le premier niveau de galette (110) et le deuxième niveau de galette (114) sont raccordés,
**caractérisé en ce que** le procédé comporte en outre l'étape qui consiste à :
e) ménager (7321) dans le premier niveau de galette (110) une fenêtre (118) de parcours de liaison qui donne accès aux parcours (7316a) de liaison électrique de couverture supérieure, au parcours (7316b) de liaison de miroir du niveau médian de galette (112) et au deuxième ou aux deuxièmes conducteurs (7108) du deuxième niveau de galette (114).

10. Procédé selon la revendication 9, dans lequel, avant de raccorder les niveaux de galette, l'étape consistant à fabriquer (710) le deuxième niveau de galette (114) comprend les étapes qui consistent à :
i) prévoir un deuxième substrat de galette (7100),
ii) appliquer une couche isolante (7102) sur le deuxième substrat de galette (7100) et
iii) déposer un métal électriquement conducteur sur au moins une partie de la couche isolante (7102) pour former le ou les deuxièmes conducteurs (7106, 7108).

11. Procédé selon la revendication 9, dans lequel, avant de raccorder les niveaux de galette, l'étape consistant à fabriquer (720) le premier niveau de galette (110) comprend les étapes qui consistent à :
i) prévoir un premier substrat de galette (7202),
ii) graver une fenêtre initiale (7211) dans le substrat (7202) sans traverser complètement le premier substrat de galette (7202),
iii) appliquer une couche isolante (7216, 7218) sur un côté du premier substrat de galette (7202) et
iv) déposer un métal électriquement conducteur sur au moins une partie de la couche isolante (7216, 7218) de manière à former le ou les premiers conducteurs (7220).

12. Procédé selon la revendication 9, dans lequel, avant de raccorder les niveaux de galette, l'étape consistant à fabriquer (730, 732) le niveau médian de galette (112) comprend les étapes qui consistent à :
i) prévoir un substrat (7302) de niveau médian de galette,
ii) appliquer une couche structurelle (7304, 7306) sur le substrat médian de galette (7302),
iii) graver des parties (7308) de la couche structurelle (7304, 7306) pour créer un ou plusieurs îlots électriquement isolés.

13. Procédé selon la revendication 9, dans lequel le niveau médian de galette (112) est raccordé au deuxième niveau de galette (114) avant de relier le premier niveau de galette (110) à un côté opposé du niveau médian de galette (112).

14. Procédé selon la revendication 13, dans lequel avant de raccorder le niveau médian de galette (112) au deuxième niveau de galette (114), la fabrication du deuxième niveau de galette comprend les étapes qui consistent à :
i) prévoir un premier substrat de galette (7100),
ii) appliquer une couche isolante (7102) sur le deuxième substrat de galette (7100),
iii) déposer un métal électriquement conducteur (7106, 7108) sur au moins une partie de la couche isolante (7102),
la fabrication du niveau médian de galette (112) comprenant les étapes qui consistent à :
iv) prévoir un substrat médian de galette (7302),
v) appliquer une couche structurelle (7304, 7306) sur le substrat médian de galette (7302),
vi) graver des parties (7308) de la couche structurelle (7304, 7306) pour créer un ou plusieurs îlots électriquement isolés,
la fabrication du premier niveau de galette (110) comprenant les étapes qui consistent à :
vii) prévoir un premier substrat de galette (7202),
viii) graver une fenêtre initiale (7211) dans le substrat (7202) sans traverser complètement le premier substrat de galette (7202),
ix) appliquer une couche isolante (7216, 7218) sur un côté du premier substrat de galette (7202),
x) déposer un métal électriquement conducteur (7220) sur au moins une partie de la couche isolante (7216, 7218),
le procédé comprenant ensuite les étapes qui consistent à :
e) relier le niveau médian de galette (112) au deuxième niveau de galette (114),
f) amincir le substrat médian de galette (7302),
g) graver une partie (7314) de la couche structurelle (7304, 7306) de galette médiane de manière à donner accès au deuxième ou aux deuxièmes conducteurs (7108),
h) déposer un métal (7312) sur les parties restantes de la couche structurelle (7304, 7306) pour former les parcours (7316a) de liaison électrique de couverture supérieure et le parcours (7316b) de liaison de miroir,
i) raccorder le premier niveau de galette (110) au niveau médian de galette (112) et
j) graver la fenêtre initiale (7211) à travers le premier substrat de galette (7202) de manière à former une fenêtre (7321) qui donne accès au parcours (7316a) de liaison électrique de couverture supérieure et au parcours (7316b) de liaison de miroir à travers la fenêtre.

15. Procédé selon la revendication 9, dans lequel le niveau médian de galette (112) est relié au premier niveau de galette (110) avant d'être relié au deuxième niveau de galette (114) sur un côté opposé du niveau médian de galette (112).

16. Procédé selon l'une quelconque des revendications 9 à 15, dans lequel le miroir (528) est constitué d'une microstructure mobile (510) fabriquée sur une partie du niveau médian de galette (112).

17. Procédé selon la revendication 16, comprenant en outre la formation d'un creux (7104, 7206) dans le premier niveau de galette (110) et le deuxième niveau de galette (114) de manière à permettre à la microstructure (510) de se déplacer.

18. Procédé selon la revendication 17, comprenant en outre l'étape qui consiste à former une structure de contrôle de déplacement dans le deuxième creux de galette (7104) en vue de contrôler le déplacement de la microstructure (510).

19. Procédé selon la revendication 9, dans lequel
i) l'étape consistant à fabriquer le deuxième niveau de galette (114) comprend l'étape consistant à graver une partie d'un deuxième substrat de galette (7100) de manière à former un deuxième creux (7104) doté d'une structure de contrôle de déplacement et déposer du métal au moins dans le deuxième creux de manière à former les deuxièmes conducteurs (7106),
ii) l'étape consistant à fabriquer le premier niveau de galette comprend l'étape qui consiste à graver une partie d'un premier substrat de galette (7202) de manière à former un premier creux (7206) et déposer du métal sur au moins une surface du premier niveau de galette (110) en vue de former les premiers conducteurs (7220) et
iii) le miroir (528) étant constitué d'une microstructure (510) suspendue à la Cardan et apte à se déplacer dans le premier creux (7206) et le deuxième creux (7104) lorsque de l'énergie est appliquée sur les premiers conducteurs (7220) et les deuxièmes conducteurs (7106).

20. Procédé selon la revendication 19, dans lequel avant de raccorder le niveau de galette, l'étape consistant à fabriquer le niveau médian de galette comprend les étapes qui consistent à :
i) prévoir un substrat médian de galette (7302),
ii) appliquer une première couche structurelle (7304) sur le substrat médian de galette (7302),
iii) appliquer une deuxième couche structurelle (7306) sur la première couche structurelle (7304) et
iv) graver des parties (7308) de la deuxième couche structurelle (7306) de manière à créer un ou plusieurs îlots électriquement isolés.

21. Procédé selon la revendication 20, comprenant les étapes qui consistent à :
i) raccorder le niveau médian de galette (112) au premier niveau de galette (110),
ii) amincir le substrat médian de galette (7302) jusqu'à la première couche structurelle (7304),
iii) graver une fenêtre initiale (7210) dans le premier substrat de galette (7202) en maintenant en place une partie du substrat,
iv) déposer un métal (7312) sur le substrat médian de galette aminci de manière à former des parcours de liaison (7316),
v) séparer la première couche structurelle (7304) en des emplacements sélectionnés de manière à lui permettre de se déplacer,
vi) raccorder le deuxième niveau de galette (114) au niveau médian de galette (112) sur le côté opposé au premier niveau de galette (110) et
vii) graver le premier substrat de galette (7202) sur la fenêtre initiale de manière à ouvrir une fenêtre (7320) qui donne accès à la microstructure (510).

22. Procédé selon la revendication 19, dans lequel avant de raccorder les niveaux de galette, l'étape qui consiste à fabriquer le niveau médian de galette comprend les étapes qui consistent à :
i) prévoir un substrat médian de galette (7302),
ii) appliquer une première couche structurelle (7304) sur le substrat médian de galette (7302),
iii) appliquer une deuxième couche structurelle (7306) sur la première couche structurelle (7304),
iv) graver des parties (7308) de la deuxième couche structurelle (7306) pour créer un ou plusieurs îlots électriquement isolés et
v) déposer du métal (7312) sur les îlots en vue d'une liaison électrique.

23. Procédé selon la revendication 22, comprenant les étapes qui consistent à :
i) relier le niveau médian de galette (112) au premier niveau de galette (110),
ii) amincir le substrat médian de galette (7302) jusqu'à la première couche structurelle (7304),
iii) graver le premier substrat de galette (7202) de manière à former une fenêtre (7320) qui donne accès à la microstructure (510),
iv) déposer du métal (7312) sur le substrat médian de galette aminci de manière à former des parcours de liaison (7316),
v) séparer la première couche structurelle (7304) en des emplacements sélectionnés (7314) de manière à lui permettre de se déplacer et
vi) relier le deuxième niveau de galette (114) au niveau médian de galette (112) du côté opposé au premier niveau de galette (110).
